# EUROPEAN PATENT APPLICATION

(11) **EP 4 088 973 A1**
(43) Date of publication of application: **16.11.2022**
(21) Application number: 22170484.4
(22) Date of filing: 28.04.2022
(51) Int. Cl.: B60R 5/04, B60N 3/10, B60R 11/00

(54) **VEHICLE EQUIPPED WITH A HIGH-CAPACITY BOTTLE HOLDER FOR REAR PASSENGERS**

(30) Priority: 13.05.2021 IN 202111021732; 24.06.2021 FR 2106747
(71) Applicant: Renault s.a.s, 92100 Boulogne Billancourt (FR)
(72) Inventor: INNASULU, Jesudoss, 603002 Kancheepuram (IN); JOHN, Sani, 603002 Kancheepuram (IN); RAMAKRISHNAN, Satheesh-Kumar, 603002 Kancheepuram (IN); VIJAYAKUMAR, Gokul, 600082 Chennai (IN)

(57) **Abstract**

The invention relates to a vehicle (1, 100) comprising a rear row of seats (4, 5, 6, 102, 103, 104) and a rear shelf (101) placed just behind said row and covering at least partially a rear trunk.

According to the invention, the rear shelf (101) comprises at least one circular opening and at least one support element (108, 109, 120, 150) comprising a bottle receiving body (123, 157), the support element (108, 109, 120, 150) being inserted in the opening so that the bottle receiving body (123, 157) is placed under the rear shelf and so that the circular opening constitutes an upper extremity of said body (123, 157).

## Description

The present invention relates to a vehicle equipped with a high-capacity bottle holder for rear passengers.

In order to fully understand the positioning of the various parts involved in a vehicle according to the invention, the description is made with reference to a direct orthonormal reference mark XYZ in which X is a front-rear longitudinal axis of the vehicle oriented towards the rear, Y is a transverse axis oriented to the right of the vehicle and Z is a vertical axis oriented upward.

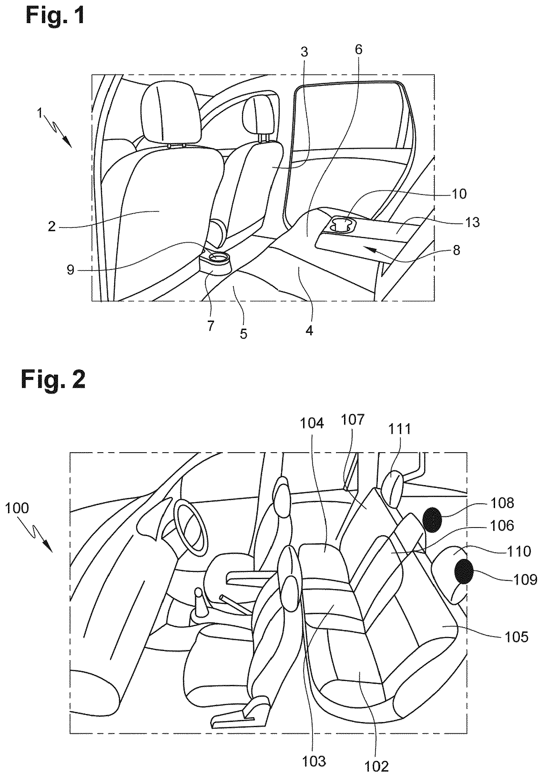

Referring to figure 1, the existing vehicles comprise different support elements designed to store bottles for the use of rear passengers. These support elements, can be found for example:
- in a central console located between a driver's seat and a passenger seat of a front row of seats, or
- in a pivotable central back of a rear row of three seats, said back moving from an operational position for which it is tilted back with respect to a vertical plan allowing a passenger to be comfortably seat, to a sensibly horizontal position for which it can be used as a cup holder and/or a bottle holder.

The problem raised by these different configurations is that these different support elements are intended to store only 1 liter of drink for the use of rear passengers, which is considered greatly insufficient. This small capacity of storage results from the weak number of locations in the vehicle interior which can be designed to store bottles for the use of rear passengers.

A vehicle pursuant to the invention is designed to be able to store a great quantity of drink, higher than 1 liter, for the use of rear passengers, without reducing the available space for said passengers and thus by preserving their comfort in the vehicle interior.

The object of the invention is a vehicle comprising a rear row of seats and a rear shelf placed just behind said row and covering at least partially a rear trunk.

According to the invention, the rear shelf comprises at least one circular opening and at least one support element comprising a bottle receiving body, the support element being inserted in the opening so that the bottle receiving body is placed under the rear shelf and so that the circular opening constitutes an upper extremity of said body. The principle of the invention is to use the rear shelf placed behind a rear row of seats as a location for implementing support elements provided for storing bottles. Generally, the rear shelf is similar to a panel extending in a horizontal plan XY of the vehicle when the latter lies itself on a horizontal plan, and in the framework of the invention the bottle receiving body of the support element preferably extends along a vertical axis. This body is designed to extend in the rear trunk, by being suspended under the rear shelf. A bottle receiving body may be for example a rigid cylindrical wall having sizes slightly greater than those of a bottle. In another preferred embodiment of the invention, a bottle receiving body is similar to a deformable pocket which does not take a lot of place when it is empty, and that can be deformed to take the form of a bottle when the latter is introduced inside it. For this last embodiment corresponding to a deformable pocket, if no bottle is stored in the bottle receiving body, said body extends inside the rear trunk with a possibility to be deformed or folded under the effect of a contact with goods to be stored in the rear trunk. This way, the deformable bottle receiving body will not reduce the capacity of the rear trunk to store different objects.

According to a possible characteristic of the invention, the support element comprises a movable cover designed to move from a closed position for which it covers the bottle receiving body and prevents any access to said body, to an open position for which it allows an access to the bottle receiving body for inserting a bottle inside said body. This cover is designed to prevent any object other than a bottle to fall inside the bottle receiving body. Moreover, such a cover is designed to hide the opening of the rear shelf and thus to improve the aesthetic of the vehicle interior.

According to a possible characteristic of the invention, the support element comprises a rim on which the cover is rotatably mounted, the bottle receiving body being fixed to the rim so that the rim lies on the rear shelf around the opening, the cover being placed above the rim and the bottle receiving body being suspended below said rim. The rim acts as a pedestal which is intended to be placed on and in contact with the rear shelf, so that the cover protrudes above the rear shelf and that the bottle receiving body is suspended under said rear shelf.

According to a possible characteristic of the invention, the rim lies on the rear shelf so as to be flush with an upper surface of said rear shelf.

According to a possible characteristic of the invention, the cover is rotatably mounted in the rim by means of one hinge, the cover having to be placed in the open position before introducing a bottle inside the bottle receiving body, said open position being reached by means of a rotation of said cover from its closed position. Advantageously, the cover is made one piece. It moves from the closed position to the open position by a rotational movement carried out by means of a manipulation with hand. Advantageously, the rim is made plastic.

According to a possible characteristic of the invention, the bottle receiving body is a net which hangs under the rear shelf, said net taking the shape of the bottle when said bottle is introduced inside it. A bottle receiving body in the form of a net is thus deformable and can be easily folded. Hence, it can make place to charge any object in the rear trunk. It does not constitute a rigid protrusion inside the rear trunk which would prevent to charge objects of great size.

According to a possible characteristic of the invention, the net is made of mesh fabric. With such a bottle receiving body, a vehicle pursuant to the invention does not become heavier. With such a configuration, a bottle receiving body is dimensioned exactly.

According to a possible characteristic of the invention, the net is made of nylon fabric. They appear to be a suitable material in the framework of the invention, but which is not limitative.

According to a possible characteristic of the invention, the cover is composed of two flat parts which are each rotatably mounted in the rim, the two flat parts being in the extension of each other when the cover is in the closed position, so that an individual wishing to place a bottle inside the bottle receiving body, will have to exert a pressure on the two parts of the cover with said bottle, before making rotate these two parts towards the inside of said body by means of a downward movement of the bottle. This configuration corresponds to a second preferred embodiment of the invention involving a cover in two parts. The individual holds the bottle in his hand, then put the bottom of the bottle in contact with the two-parts cover, and finally moves the bottle vertically downward to open the two parts of the cover. The bottle simultaneously causes the rotation of the two parts of the cover inside the bottle receiving body. Advantageously, each part has the shape of a half circular disc, and when the cover is in the closed position, these two flat parts reconstitute a circular cover. Advantageously, the rim is made plastic. Finally, when the bottle is placed inside the bottle receiving body, the two parts of the cover are also stored inside said body.

According to a possible characteristic of the invention, each part of the cover is rotatably mounted in the rim by means of a pre-stressed spring tending naturally to maintain these two parts in the extension of each other, an individual wishing to introduce a bottle inside the bottle receiving body having to make an effort to overcome the force of said spring. The individual has to produce a certain effort to introduce the bottle in the bottle receiving body, in order to overcome the strength of the pre-stressed springs.

According to a possible characteristic of the invention, the bottle receiving body is made of elastic fabric. Since the two parts of the cover are intended to rotate inside the bottle receiving body simultaneously with the bottle insertion, the bottle receiving body risks to be not great enough to receive these three elements. simultaneously. With an elastic fabric, the bottle receiving body can be easily deformed and thus can easily receive the bottle and the two parts of the cover.

According to a possible characteristic of the invention the vehicle comprises two support elements aligned on the rear shelf along a transverse axis Y of the vehicle. Assuming that the rear row of seats comprises three seats, one central and two lateral seats, the vehicle comprises two support elements placed in the rear shelf just behind the two lateral seats.

A vehicle pursuant to the invention has the advantage to have a rear shelf having two functions, one which is usual and consisting in separating the rear trunk from the interior of the vehicle, and the other which is more original and consisting in supporting at least one bottle receiving body to store at least one bottle. It also presents the advantage to have this supplemental function (storing bottles) without reducing the total capacity of the rear trunk and without increasing its weigh.

We give hereafter a detailed description of a preferred embodiment of a vehicle pursuant to the invention, with reference to the following drawings:
[Fig. 1] shows a perspective view of the interior of an existing vehicle,
[Fig. 2] shows a perspective view of the interior of a vehicle pursuant to the invention,
[Fig. 3] shows a perspective view of a first preferred embodiment of an assembly comprising a cover, a rim and a bottle receiving body of a vehicle pursuant to the invention and intended to support a bottle,
[Fig. 4] shows a perspective view of the cover and the rim of the assembly of figure 3,
[Fig. 5] shows a perspective view of a second preferred embodiment of an assembly comprising a cover, a rim and a bottle receiving body of a vehicle pursuant to the invention and intended to support a bottle,
[Fig. 6] shows a perspective view of the cover and the rim of the assembly of figure 5,
[Fig. 7] shows a perspective view of a rear shelf of a vehicle pursuant to the invention showing a location of the assembly of figure 5,
[Fig. 8] shows a perspective view of an area of the rear shelf of figure 7 comprising the assembly with a bottle inside.

Referring to figure 1, an existing vehicle 1 schematically comprises a front row including a driver seat 2 and a passenger seat 3 placed beside said driver seat 2, and a rear row of seats including a central seat 4 and two lateral seats 5, 6 placed on both side of said central seat 4. The driver seat 2 and the passenger seat 3 of the front row are separated by a central console 7 which extends on a floor along a longitudinal and central axis X of the vehicle 1. The central seat 4 of the rear row has a pivotable back 8 which can be moved from an operational position for which it is slightly tilted back with respect to a vertical plan, to a deployed position for which it has rotated frontward from said operational position with an angle greater than 90°to find itself in a horizontal plan, as shown in figure 1. The notions of "horizontal" and "vertical" must be considered as if the vehicle was resting on a horizontal plan.

Such an existing vehicle 1 comprises different support elements 9, 10 designed to store bottles for the use of rear passengers wishing to drink something. These support elements 9, 10 can be found for example:
- in the central console 7 in the form of an extension 9 comprising two circular openings and extending rearward along a longitudinal axis X of the vehicle 1 to lead to the rear row, said openings being designed to receive a glass or a bottle,
- in the pivotable back 8 of the central seat 4 of the rear row as shown in figure 1. Indeed, in the deployed position, said back 8 has an upper surface 13 that extends in a horizontal plan, said surface 13 including a support element 10 having two circular openings that can be used as a cup holder and/or a bottle holder.

The problem raised by these different configurations of bottles storages, is that these different support elements 9, 10 are intended to store only 1 liter of drink for the use of rear passengers, which is considered greatly insufficient. This small capacity of bottle storage results from the weak number of locations in the vehicle interior which can be designed to store bottles for the use of rear passengers.

Referring to figure 2, a vehicle 100 pursuant to the invention is designed to store at least 3 liters of drink for the use of the rear passengers by means of a selection of judicious locations in the vehicle interior, these judicious locations being essentially concentrated on a rear shelf 101.

As a reminder, the rear shelf 101 is similar to a horizontal panel which separates the vehicle interior where the occupants of the vehicle are housed, and a rear trunk situated just behind the rear row of seats 102, 103, 104. This rear shelf 101 is in contact with a rear surface of the backs 105, 106, 107 of the seats of the rear row.

In the framework of the invention, the rear shelf 101 of the vehicle 100 is provided to integrate two support elements 108, 109 each intended to house a bottle. Preferably, as shown in figure 2, these two support elements 108, 109 are aligned along a transverse axis Y of the vehicle 100 and are placed just behind the headrests 110, 111 of the two lateral seats 102, 104 of the rear row. Of course, a vehicle pursuant to the invention is not limited to two support elements and can comprise only one, or three even more support elements. In the same way, the two support elements 108, 109 of the preferred embodiment disclosed in the present detailed description, can be implemented everywhere in the rear shelf 101.

In order to insert a support element 108, 109 in the rear shelf 101, one circular opening (not visible on the figures) must be made in said rear shelf 101.

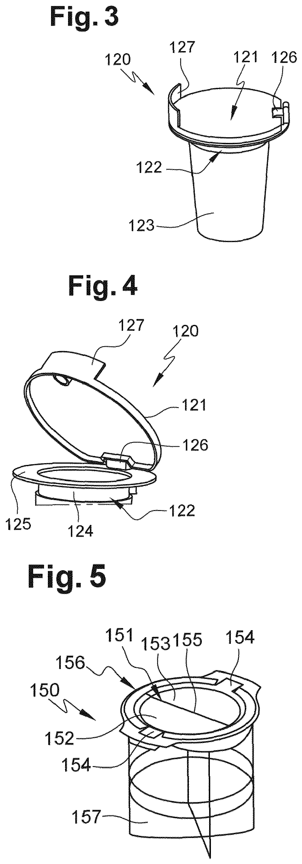

Referring to figures 3 and 4, according to a first preferred embodiment of the invention, the support element 120 comprises a cover 121, a rim 122 and a bottle receiving body 123. The rim 122 which is made plastic, comprises a cylindrical hollow body 124 having an enlarged collar 125 extending outward said hollow body 124. This collar 125 is plan and is perpendicular to the revolution axis od said hollow body 124. The cover 121 is a circular and flat piece having a diameter which is slightly lower than the external diameter of the collar 125. The cover 121, which is made plastic, is rotationally mounted in the rim 122 by means of a single hinge 126. The cover 121 comprises a raised peripheral edge 126, which is curved in order to follow the curvature of said cover 121 This raised peripheral edge 127 extends on an angular sector of the cover 121, which is lower than 60° and aims to serve as a handle to open or close said cover 121 relatively to the rim 122. The bottle receiving body 123 is similar to a pocket made of mesh fabric. Advantageously, the constitutive material of said body 123 is nylon. The bottle receiving body 123 is fixed around the hollow cylindrical body 124 of the rim 122 and is provided to receive a bottle 130.

The support element 120 is fixed in the opening of the rear shelf 101 so that:
- the rim 122 lies on the rear shelf 101 by being placed around the opening of said shelf 101 by being flush with an upper surface of the said rear shelf 101 ,
- the bottle receiving body 123 is suspended to the rim 122 lying on the rear shelf 101, so as to extend downward in the rear trunk,
- the cover 121 is placed above the rear shelf 101.

An individual wishing to store a bottle in the support element 120 will have to make the following stages, by assuming that the cover 121 is in a closed position on the rim 122, preventing all access to the bottle receiving body 123. In this closed position, the cover 121 covers the rim 122 and extend in a horizontal plan XY,
- Taking the raised peripheral edge 127 of the cover 121 with hand,
- Opening the cover 121 by pivoting upward said cover 121 around the hinge 126, allowing to access to the bottle receiving body 123 as shown in figure 4,
- Introducing a bottle in the rim 122,
- Making the bottle penetrate the bottle receiving body 123, by sliding vertically downwards, until the bottle reaches the bottom of said body. The bottle receiving body 123 is deformed by the presence of the bottle inside it, by adopting the shape of the bottle.

If the individual does not need anymore the bottle, he can remove it from the support element 120. He makes rotate the cover 121 up to the closed position for which said cover 121 is in contact with the rim 122. This closure is achieved by means of a magnetic interaction between said rim 122 and said cover 121 at least one of these two elements comprising at least one magnet. The cover 121 is moved always by means of a manipulation with hand.

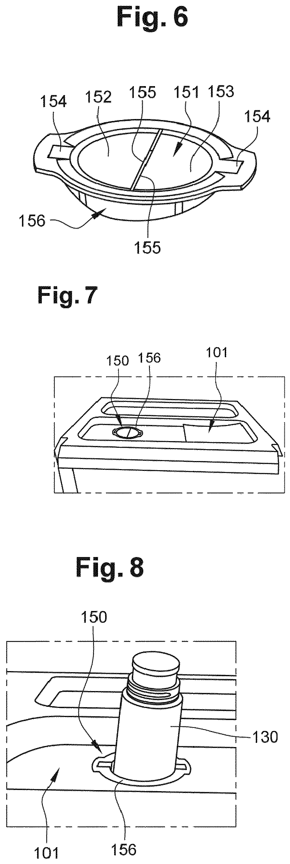

Referring to figures 5 and 6, a second preferred embodiment of the invention differs from the first preferred embodiment disclosed above, about the cover of the support element.

Indeed, in the second preferred embodiment of the invention, the cover 151 of the support element 150 is made two identical parts 152, 153. Each part 152, 153 is a flat piece having the shape of the half of a disc, and having a fixing bracket 154. In other words, a part 152, 153 of the cover 151 has a straight edge 155 and the fixing bracket 154 extends outward said part 152, 153, opposite to said straight edge 155. Each part 152, 153 is rotatably mounted to a rim 156 which is similar to the one of the first preferred embodiment 120. The cover 151 can move from a closed position as shown in figures 5 and 6 for which it prevents all access to the bottle receiving body 157, to an open position as suggested by figure 8. More precisely, when the cover 151 is in the closed position, the two parts 152, 153 of the cover 151 are coplanar and are disposed in the rim 156 so that the two straight edges 155 face each other with a distance lower than some millimeters, and so that the fixing brackets 154 appear as being the most distant areas of said two parts 152, 153. In the closed position, the two parts 152, 153 are disposed to reconstitute a circular cover 151. Each part 152, 153 of the cover 151 is rotatably mounted on the rim 156 by means of an axis of said rim 156 going through the fixing bracket 154. To each axis of the rim 156 is associated a pre-stressed ring tending to maintain coplanar the two parts 152, 153 of the cover 151 in the closed position. This way, these pre-stressed rings help to maintain the cover 151 in the closed position.

Referring to figure 8, an individual wishing to store a bottle in the support element 150 will have to make the following stages, by assuming that the cover 151 is in the closed position on the rim 122, as disclosed above. In this closed position, the two parts 152, 153 covers the rim 156 and extend in a horizontal plan XY,
- having a bottle in hand
- Putting in contact the bottom of the bottle with the two parts 152, 153 of the cover 151
- Moving the bottle downward by causing a downward rotation of the two parts 152, 153 of the cover 151, this rotation requiring a certain effort to overcome the strength of the pre-stressed rings
- Making the bottle penetrate the bottle receiving body 157, until it reaches the bottom of said body 157. The bottle receiving body 157 takes the shape of the bottle by being deformed. Moreover, this bottle receiving body 157 is also deformed by the two parts 152, 153 of the cover 151.which have pivoted inside said body 157, under the effect of the downward movement of the bottle. In order to eliminate the risk of tearing the bottle receiving body, said body is advantageously made of elastic fabric.

## Claims

1. Vehicle (1, 100) comprising a rear row of seats (4, 5, 6, 102, 103, 104) and a rear shelf (101) placed just behind said row and covering at least partially a rear trunk, **characterized in that** the rear shelf (101) comprises at least one circular opening and at least one support element (108, 109, 120, 150) comprising a bottle receiving body (123, 157), and **in that** the support element (108, 109, 120, 150) is inserted in the opening so that the bottle receiving body (123, 157) is placed under the rear shelf and so that the circular opening constitutes an upper extremity of said body (123, 157).

2. Vehicle according to claim 1, **characterized in that** the support element (108, 109, 120, 150) comprises a movable cover (121, 151) designed to move from a closed position for which it covers the bottle receiving body (123, 157) and prevents any access to said body (123, 157), to an open position for which it allows an access to the bottle receiving body (123, 157) for putting a bottle (130) inside the body (123, 157).

3. Vehicle according to claim 2, **characterized in that** the support element (108, 109, 120, 150) comprises a rim (122, 156) on which the cover (121, 151) is rotatably mounted, and **in that** the bottle receiving body (123, 157) is fixed to the rim (122, 156) so that the rim (122, 156) lies on the rear shelf (101) around the opening, the cover (121, 151) being placed above the rim (122, 156) and the bottle receiving body (123, 157) being suspended below said rim (122, 156).

4. Vehicle according to claim 3, **characterized in that** the rim (122, 156) lies on the rear shelf (101) so as to be flush with an upper surface of said rear shelf (101).

5. Vehicle according to any of claims 3 or 4, **characterized in that** the cover (121) is rotatably mounted in the rim (122) by means of one hinge (126) and **in that** the cover (121) has to be placed in the open position before introducing a bottle (130 ) inside the bottle receiving body (123), said open position being reached by means of a rotation of said cover (121)from its closed position.

6. Vehicle according to any of claims 1 to 5, **characterized in that** the bottle receiving body (123) is a net which hangs under the rear shelf (101), and **in that** the net takes the shape of the bottle (130) when said bottle (130) is introduced inside it.

7. Vehicle according to claim 6, **characterized in that** the net is made of mesh fabric.

8. Vehicle according to any of claims 3 or 4, **characterized in that** the cover (151) is composed of two flat parts (152, 153) which are each rotatably mounted in the rim (156), and **in that** the two flat parts (152, 153) are in extension of each other when the cover (151) is in the closed position, so that an individual wishing to place a bottle (130) inside the bottle receiving body (157) will have to exert a pressure on the two parts (152, 153) of the cover (151) with said bottle (130) before making rotate these two parts (152, 153) towards the inside of said body (157) by means of a downward movement of the bottle (130).

9. Vehicle according to claim 8, **characterized in that** each part (152, 153) of the cover (151) is rotatably mounted in the rim (156) by means of a pre-stressed spring tending naturally to maintain these two parts (152, 153) in extension of each other, and **in that** an individual wishing to introduce a bottle (130) inside the bottle receiving body (157) will have to make an effort to overcome the force of said spring.

10. Vehicle according to claim 9, **characterized in that** the bottle receiving body (157) is made of elastic fabric.

11. Vehicle according to any of claims 1 to 9, **characterized in that** it comprises two support elements (108, 109) aligned on the rear shelf (101) along a transverse axis Y of the vehicle.
